Europäisches Patentamt

(19) European Patent Office

Office européen des brevets

(11) Numéro de publication: **0 107 583**
**B1**

(12) **FASCICULE DE BREVET EUROPEEN**

(45) Date de publication du fascicule du brevet:
26.02.86

(51) Int. Cl.⁴: **C 02 F 1/00**, **E 04 H 3/20**, **C 02 F 1/76**

(21) Numéro de dépôt: **83402007.5**

(22) Date de dépôt: **14.10.83**

(54) **Procédé et installation de traitement en continu des eaux de piscine, réduisant leur teneur en haloformes.**

(30) Priorité: **15.10.82 FR 8217255**

(43) Date de publication de la demande:
**02.05.84 Bulletin 84/18**

(45) Mention de la délivrance du brevet:
**26.02.86 Bulletin 86/9**

(84) Etats contractants désignés:
**CH DE GB LI**

(56) Documents cités:
**EP - A - 0 022 368**
**DE - A - 1 517 587**
**DE - A - 2 707 471**
**FR - A - 572 545**
**GB - A - 728 818**

**"Design of aeration towers to strip volatile contaminants from drinking water" M.C. Kavanaugh & R. Rhodes Trussell, Journal of the American Water Work Assoc. (1980) pages 684 à 692**

(73) Titulaire: **Saunier, Bernard, 2 rue des Glénans, F-35760 Z.A. Saint-Grégoire (FR)**
Titulaire: **Derreumaux, Antoine, 19 boulevard Beauséjour, F-75016 Paris (FR)**

(72) Inventeur: **Saunier, Bernard, 2 rue des Glénans, F-35760 Z.A. Saint-Grégoire (FR)**
Inventeur: **Derreumaux, Antoine, 19 boulevard Beauséjour, F-75016 Paris (FR)**

(74) Mandataire: **Marquer, Francis, 35, Avenue Victor Hugo Résidence Chamfleury, F-78180 Voisins-le-Bretonneux (FR)**

LIBER, STOCKHOLM 1986

## Description

L'invention se rapporte au traitement des eaux de piscine au moyen d'halogènes.

Les procédés de traitement connus associent généralement, en vue d'obtenir une désinfection de l'eau et l'elimination de sa turbidite, une filtration et le maintien dans l'eau de doses résiduelles de chlore libre ou de brome libre comprises entre 1,5 et 3,0 mg/l, avec un pH proche de 7,5.

Depuis quelques années les concentrations residuelles d'halogène libre autorisées sont de plus en plus élevées, ce qui permet de maitriser parfaitement la qualité microbiologique de l'eau. On a malheureusement noté une augmentation parallèle des plaintes d'usagers atteints d'irritation oculaire et incommodés par les odeurs de chlore.

Les Demandeurs ont découvert que ces inconvénients sont étroitement liés à la présence, en concentration excessive, dans l'eau des piscines ainsi traitées, de composés volatils formés par la réaction de l'halogene avec les matières organiques.

Il est connu que les eaux potables peuvent contenir des composés organo-chlorés ou organo-bromés volatils, tels que: chloroforme, monochlorodibromométhane, dichloromonobio-momométhane, bromoforme et autres. Ces composés volatils sont couramment désignés sous les termes d'haloformes, ou halométhanes, qui seront utilisés dans la présente description et les revendications annexées.

L'invention a pour objet un procédé de traitement basé sur la découverte du lien qui existe entre la teneur en halomethanes et les inconvénients susvisés. La présence d'haloformes dans certaines eaux naturelles présentant une coloration a été mentionnée dans un article de Johannes J. Rook intitulé 'Water Technology'', p. 168 à 172 du 'Journal of the American Water Works Association'', Mars 1976 et leur élimination par dégazage à l'air dans une tour de stripping a été suggérée dans un articale de la même revue, intitulé 'Design of aeration towers to strip volatile contaminants from drinking water'', publié en 1980, pages 684 à 692, par Michael C. Kavanaugh et R. Rhodes Trussel.

Le brevet français FR A- 572 545 décrit par ailleurs un traitement en continu de l'eau de piscine, comportant une stérilisation par de l'eau de Javel ou du chlore liquide, et l'élimination de certains corps étrangers volatils au moyen d'un aérateur.

Toutefois, il n'est pas suggéré dans l'état de la technique que les irritations oculaires et le discernement de l'cdeur de chlore sont exagérés par la présence des halométhanes.

Le procédé selon l'invention, qui comporte la désinfection des eaux de piscine par le maintien d'une dose résiduelle appropriée d'halogène libre et leur aération en vue d'éliminer les corps volatils qu'elles contiennent, est caractérisé par une opération de réduction, en continu, de la teneur en halométhanes de l'eau traitée, effectuée par dégazage à l'air dans une tour de stripping, de façon à maintenir en permanence la teneur en halométhanes à 100 µg/l et, de preférence, moins de 50 µg/l.

D'autres particularités, ainsi que les avantages de l'invention, apparaitront clairemer* à la lumière de la description ci-après:

Au dessin annexé: la figure 1 représente schématiquement une installation dans laquelle la tour de stripping est en dérivation dans la filière de désinfection et de filtration, et placée après le filtre principal; la figure 2 représente une variante où la tour de stripping est en série, et placée avant le filtre principal et après la désinfection, et la figure 3 représente schématiquement une tour de stripping susceptible d'être utilisée dans l'installation.

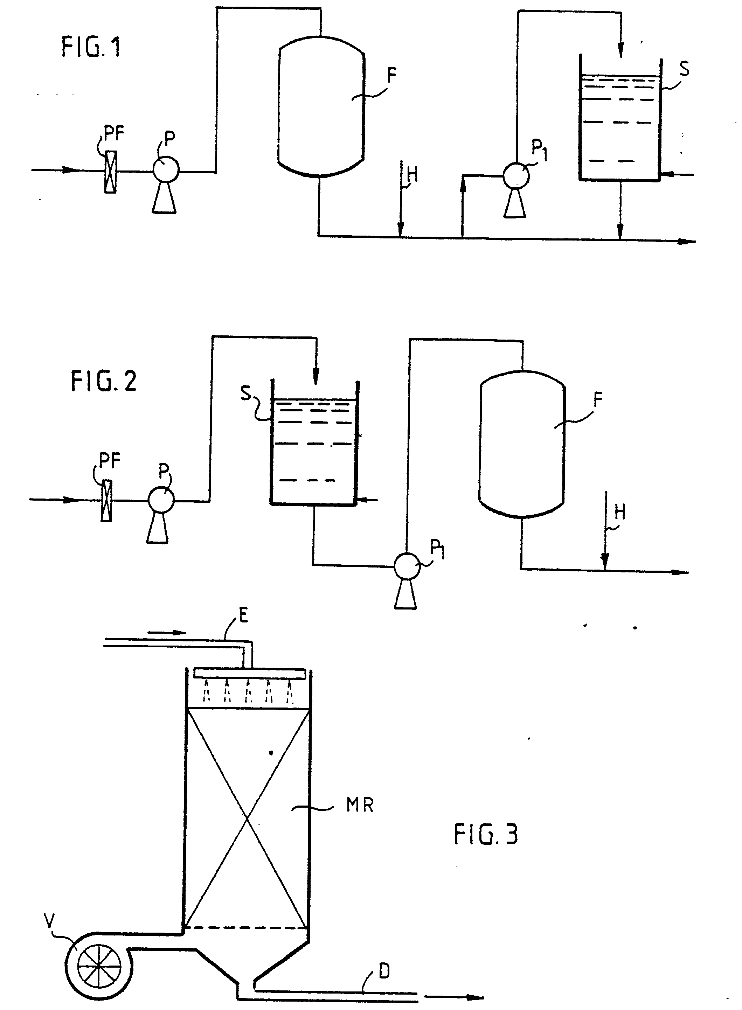

Aux figures 1 et 2, on voit que l'installation comporte de façon bien connue en soi, un pré-filtre PF, une pompe P, un filtre principal F et un dispositif d'introduction de l'halogène désinfectant, simplement symbolisé par une flèche H. Dans le mode d'exécution de la figure 1, une tour de stripping 8 est branchée en dérivation sur la ligne, en aval des dispositifs F et H. Une pompe $P_1$ assure l'alimentation en eau à traiter de la tour S. Il doit être bien compris que la pompe P et la tour S pourraient, à titre de variante, être branchées en série dans la ligne, en aval de F et H.

Dans le mode d'exécution de la figure 2, la pompe $P_1$ et la tour S sont en série, entre PF et F. Elles pourraient, à titre de variante, être branchées en dérivation, entre PF et F. Il doit être bien compris que le choix du mode de branchement dépendra uniquement de considérations d'ordre pratique et que l'invention s'applique même au cas où la tour de stripping serait branchée directement sur le bassin, sans aucune relation avec l'installation de désinfection et de filtration existante.

La filtration s'effectue classiquement sur sable. Il sera avantageux, soit de remplacer cette filtration sur sable par une filtration sur charbon actif en grains, soit d'effectuer les deux filtrations en série, soit encore d'injecter du charbon actif en poudre en amont du filtre à sable. Ces améliorations à la filtration se conjuguent au stripping pour réduire la teneur de l'eau en halométhanes, en éliminant une partie des matières organiques qui contribuent à leur formation.

La tour de stripping représentée à la figure 3, d'un type connu en soi, comporte une arrivée supérieure d'eau en pluie E, un départ inférieur D de l'eau traitée et une centrale V d'injection d'air à la base du matériau de remplissage MR. Ce matériau peut être constitué d' éléments en matière plastique, en métal, en verre, en porcelaine ou autre, ayant une forme qui confere au matériau, un fort indice de vide. On a ainsi un ruissellement de l'eau à l'intérieur du matériau et un bon contact entre l'eau et l'air, qui fera passer les halométhanes de la forme dissoute à la forme gazeuse pour être entrainés avec 1, air, selon un procédé d'entrainement des fractions légères et volatiles bien connu en soi. La hauteur de la tour peut être comprise entre 2 et 10 mètres et de préférence, entre 4 et 5 mètres. Pour un rapport de 60 entre les volumes d'air et d'eau injectés, une hauteur de 4

2

m, une surface au sol de la tour de 1 m² et un remplissage avec des anneaux en matière plastique, on a pu, à titre d'exemple, réduire de 90% la teneur en haloformes avec un débit d'eau de 100 m³/h.

Le tableau 1 ci-dessous montre l'évolution dans le temps de la concentration en haloformes d'une eau de piscine, ayant une teneur initiale de 131 µg/l, au bout de 30 jours (colonne T + 30); 60 jours (colonne T + 60); 90 jours (colonne T + 90) et 120 jours (colonne T + 120). La première ligne est relative à une eau prise dans un bassin d'une piscine avec traitement de stripping; la seconde ligne est relative à une eau prise dans un autre bassin de la meme piscine, sans traitement de stripping.

**TABLEAU 1**

| T + 30 | T + 60 | T + 90 | T + 120 |
|--------|--------|--------|---------|
| 29 µg/ℓ | 47 µg/ℓ | 33 µg/ℓ | 42 µg/ℓ |
| 287 µg/ℓ | 425 µg/ℓ | 538 µg/ℓ | 948 µg/ℓ |

Les teneurs sont indiquées en µg/l On voit que la teneur en haloformes criôt rapidement avec le temps dans le second bassin, jusqu'à atteindre des valeurs très élevées.

Les Demandeurs ont pu observer, dans certaines piscines, dans certains cas, après 60 jours de chloration, des teneurs atteignant un ordre de grandeur de 1.400µg/l. Ces teneurs dépendent du produit halogéné utilisé pour le traitement, mais aussi, de la teneur en matières organiques, en particulier de celles qui sont mesurées comme carbone organique total (COT). Le COT varie de 2 à 15 mg/l dans l'eau potable, mais la quantité apportée par les baigneurs est généralement beaucoup plus importante.

Les demandeurs ont pu établir le tableau suivant, qui indique, à la première ligne le pourcentage des baigneurs ayant subi des irritations oculaires et la seconde ligne le pourcentage des baigneurs ayant constate une odeur de chlore genante en piscine couverte, en fonction de la teneur en haloformes, exprimé en tete des colonnes en µg/l.

**TABLEAU 2**

| 50 | 50 à 100 | 100 à 250 | 250 à 500 | 500 à 750 | 750 à 1000 |
|-----|----------|-----------|-----------|-----------|------------|
| 5% | 9% | 15% | 25% | 50% | 70% |
| 8% | 12% | 18% | 31% | 69% | 80% |

Au-delà de 1.000 µg/l, on peut considérer que la piscine devient quasi inutilisable. Par contre, en dessous de 50 µg/l, les inconvénients signalés sont très réduits. On notera, dans le tableau 1, que le traitement avec stripping permet de maintenir la teneur en haloformes en dessous de cette valeur. En pratique, des essais prolongés pendant 6 mois ont montre l'efficacite du procédé.

**Revendication**

Procédé de traitement, en continu, des eaux de piscine, comportant la désinfection de l'eau de piscine par le maintien d'une dose résiduelle appropriée d'halogène libre, et l'élimination par aération de corps volatils qu'elle contient,
caractérisé par une opération de réduction de la teneur en halométhanes effectuée par dégazage à l'air dans une tour de stripping, de façon à maintenir en permanence la teneur en halométhanes à moins de 100 µg/l et, de préférence, moins de 50 µg/l.

## Patentanspruch

Verfahren zur kontinuierlichen Schwimmbeckenwasserbehandlung un ter Desinfizierung des Schwimmbeckenwassers durch Aufrechterhaltung einer angemessenen Restdosis von freiem Halogen und der Entfernung, durch Belüftung, von darin befindlichen volatilen Körpern gekennzeichnet durch die Reduzierung des Halomethangehaltes durch Luftentgasung in einem Strippingturm, um ständig den Halomethangehalt under 100 Mikrogramm und vorzugsweise unter 50 Mikrogramm pro Liter zu halten.

## Claim

A process of treatment in continuous manner of swimming pool waters, comprising the disinfection of the swimming pool water by the maintenance of an appropriate residual dosage of frée halogen and the elimination, by aeration, of volatile compositions contained therein, characterized by an operation of reduction of the content of halomethanes carried out by degassing with air in a stripping tower so as to permanently maintain the content of halomethanes at less than 100 micrograms per litre and, preferably, at less than 50 micrograms per litre.

FIG.1

FIG.2

FIG.3